(19) Europäisches Patentamt

European Patent Office

Office européen des brevets

(11) **EP 4 062 697 B1**

(12) **EUROPEAN PATENT SPECIFICATION**

(45) Date of publication and mention
of the grant of the patent:
**30.07.2025  Bulletin 2025/31**

(21) Application number: **19953641.8**

(22) Date of filing: **18.11.2019**

(51) International Patent Classification (IPC):
*H04W 72/23* ^(2023.01)    *H04W 72/1268* ^(2023.01)

(52) Cooperative Patent Classification (CPC):
**H04W 72/23; H04W 72/1268**

(86) International application number:
**PCT/CN2019/119081**

(87) International publication number:
**WO 2021/097590 (27.05.2021 Gazette 2021/21)**

(54) **SYSTEMS AND METHODS FOR DETERMINING INFORMATION INDICATIVE OF CANCELATION**

SYSTEME UND VERFAHREN ZUM BESTIMMEN VON AUF EINE AUFHEBUNG HINWEISENDEN INFORMATIONEN

SYSTÈMES ET PROCÉDÉS DE DÉTERMINATION D'INFORMATIONS INDIQUANT UNE ANNULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2022  Bulletin 2022/39**

(73) Proprietor: **ZTE Corporation**
**Shenzhen, Guangdong  518057 (CN)**

(72) Inventors:
 • **LIU, Xing**
  **Shenzhen, Guangdong 518057 (CN)**
 • **HAO, Peng**
  **Shenzhen, Guangdong 518057 (CN)**
 • **HAN, Xianghui**
  **Shenzhen, Guangdong 518057 (CN)**
 • **ZHANG, Chenchen**
  **Shenzhen, Guangdong 518057 (CN)**
 • **REN, Min**
  **Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
**WO-A1-2018/175420      CN-A- 108 633 023
US-A1- 2019 254 081     US-A1- 2019 320 448**

 • **ZTE: "UL inter-UE multiplexing between eMBB
  and URLLC", vol. RAN WG1, no. Reno, USA;
  20191118 - 20191122, 9 November 2019
  (2019-11-09), XP051823148, Retrieved from the
  Internet <URL:https://ftp.3gpp.org/tsg_ran/
  WG1_RL1/TSGR1_99/Docs/R1-1911967.zip
  R1-1911967 UL inter-UE multiplexing between
  eMBB and URLLC.docx> [retrieved on 20191109]**
 • **ANONYMOUS: "3rd Generation Partnership
  Project; Technical Specification Group Radio
  Access Network; NR; Physical layer procedures
  for control (Release 15)", vol. RAN WG1, no.
  V15.7.0, 28 September 2019 (2019-09-28), pages 1
  - 108, XP051785089, Retrieved from the Internet
  <URL:ftp://ftp.3gpp.org/Specs/archive/
  38_series/38.213/38213-f70.zip 38213-f70.docx>
  [retrieved on 20190928]**
 • **QUALCOMM INCORPORATED: "Uplink Inter-UE
  Tx Multiplexing and Prioritization", vol. RAN
  WG1, no. Reno, Nevada, USA; 20191118 -
  20191122, 9 November 2019 (2019-11-09),
  XP051823725, Retrieved from the Internet
  <URL:https://ftp.3gpp.org/tsg_ran/WG1_RL1/
  TSGR1_99/Docs/R1-1912963.zip R1-1912963
  Uplink inter-UE Tx Multiplexing and
  Prioritization.docx> [retrieved on 20191109]**

EP 4 062 697 B1

**Description**

TECHNICAL FIELD

The present disclosure relates to the field of telecommunications, and in particular, to detecting information indicative of preemption of communication resources.

BACKGROUND

Demands for the 4th Generation Mobile Communication Technology (4G), Long-Term Evolution (LTE), Advanced LTE (LTE-Advanced or LTE-A), and the 5th Generation Mobile Communication Technology (5G) are increasing at a rapid pace. Developments are taking place to provide enhanced mobile broadband, ultra-high reliability, ultra-low-latency transmission, and massive connectivity in 4G and 5G systems.
3GPP Draft R1-1911967, 3GPP TS 38.213 V15.7.0 and 3GPP Draft R1-1912963 are related prior art documents.

SUMMARY

The invention is specified by the independent claims. Preferred embodiments are defined in the dependent claims. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein.
The above and other aspects and their implementations are described in greater detail in the drawings, the descriptions, and the claims.

BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

FIG. 1 is a schematic diagram illustrating physical uplink shared channel (PUSCH) resource being canceled, in accordance with some embodiments of the present disclosure;
FIG. 2 is a schematic diagram illustrating a method for determining a UL CI monitoring occasion, in accordance with some embodiments of the present disclosure;
FIG. 3 is a schematic diagram illustrating a method for determining an UL CI monitoring occasion, in accordance with some embodiments of the present disclosure;
FIG. 4 is a schematic diagram illustrating a method for determining an UL CI monitoring occasion, in accordance with some embodiments of the present disclosure;
FIG. 5 is a flowchart diagram illustrating an example method for monitoring UL CI, in accordance with some embodiments of the present disclosure;
FIG. 6 is a flowchart diagram illustrating an example method for determining a location of canceled uplink resource;
FIG. 7A illustrates a block diagram of an example base station, in accordance with some embodiments of the present disclosure; and
FIG.7B illustrates a block diagram of an example UE, in accordance with some embodiments of the present disclosure.

DETAILED DESCRIPTION OF EXAMPLE EMBODIMENTS

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

In wireless communication systems, different types of uplink services with different transmission delay reliability requirements and different priority channels for the same service can be transmitted. In some cases, a first service with one or more of higher priority, higher reliability, or shorter transmission time can preempt (communication resources of) a second service with one or more of lower priority, lower reliability, or longer transmission time. The embodiments described herein relate to the manner in which the network side indicates or signals a transmission mechanism of an uplink service and the manner in which the terminal side monitors the indication signaling.

Developments in 5G wireless communication systems are directed to achieving higher data communicate rate (e.g., in Gbps), massive number of communication links (e.g., 1 M/Km$^2$), ultra-low latency (e.g., under 1 ms), higher reliability, and improved energy efficiency (e.g., at least 100 times more efficient than previous systems). For improved coverage, 5G systems can implement slot-based aggregation and slot-based repetitions. The slot-based aggregation is based on dynamic grant. The slot-based repetitions are based on configured grant. For example, a user equipment (UE) (e.g., a terminal, a mobile device, a mobile user, a wireless communication device, and so on) can repeatedly transmit (retransmit) a transport block (TB) across multiple (consecutive) slots. The TB is allocated the same time resource (e.g., the same symbol(s)) in each of the multiple slots. In order to support ultra-high reliability and ultra-low latency transmission, low-latency and high-reliability services need to be transmitted within a short transmission time interval. To achieve that, uplink aggregated transmission (based on dynamic grant) and uplink repetitive transmission (based on configured grant) need to be improved. In that regard, in some cases, the same TB is repeatedly transmitted in a same time slot, or the same TB is repeatedly transmitted (one or more times) across a slot boundary of a plurality of consecutive available slots.

Furthermore, in order to support ultra-high reliability and ultra-low latency transmission, a low-latency and high-reliability service that needs to be transmitted within a short transmission time interval can preempt resources that may be used by or allocated to other services with longer transmission time (before the other services are transmitted or while the other services are being transmitted). In some cases, preemptive transmission can occur for a same UE in multiple uplink transmissions/retransmissions and for multiple UEs in a single uplink transmission. In such situations, the UE that has its resources preempted may not be aware of the preemption. To minimize the performance impact in this situation, preemption indication information needs to be conveyed to the UE that has its transmission resources preempted. Based on such preemption indication information, uplink transmissions of services that have a relatively low priority can accordingly be canceled (if not yet transmitted) or stopped (while being transmitted), thus avoiding performance degradation resulting from simultaneously transmitting both types of services using the same uplink transmission resource.

Currently, with respect to downlink transmission resource preemption, a base station (e.g., BS, gNB, eNB, and so on) uses downlink control information (DCI) to indicate the preempted resources in a reference downlink resource (RDR). In particular, configured RDR is partitioned into 14 blocks by the base station, for example, using {M, N}={14, 1} or {7, 2}. A bitmap maps bits (indicative of preemption status) unto the blocks. The bitmap is used to indicate whether each of the blocks is preempted. M represents a number of partitions of the RDR in the time domain. N represents a number of partitions of the RDR in the frequency domain.

When preemption occurs, the base station can send a downlink preemption indication (DL PI) at a specific monitoring occasion after the end of the preemptive downlink transmission. The DL PI is a type of "after-the-fact" indication. The terminal further completes the reception of the downlink transmission. The UE monitors the DL PI after receiving the downlink transmission to determine whether the previous downlink transmission is preempted and processes the downlink data in response to determining that the downlink transmission has not been preempted.

With respect to uplink service cancelation, a similar indication can be defined, e.g., for uplink time-frequency domain resources. In contract with the DL PI, in order to prevent uplink transmission of the UE, the UE needs to be notified of the preemption via a UL CI before transmission of the uplink service.

In order to transmit the uplink preemption information (e.g., the UL CI) in a timely manner, the network side (including the base stations and other network functions of a network) configures monitoring occasions for the uplink preemption information in a high density (e.g., more frequently). The network side only sends the UL CI in response to a cancelation event, which can be relatively infrequent. In order not to miss any UL CI, the UE needs to blind check for the indication information on all downlink control channels or all monitoring occasions of the downlink control channels, thus increasing complexity and power consumption. In that regard, embodiments of the present disclosure allow effective detection of information indicating the preemption or cancelation of resources.

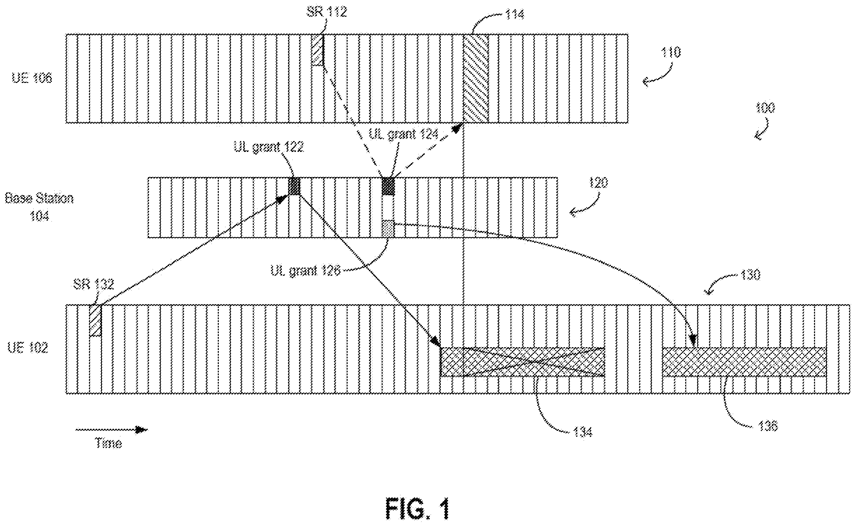

FIG. 1 is a schematic diagram illustrating a process 100 by which a physical uplink shared channel (PUSCH) uplink transmission resource is canceled, in accordance with some embodiments of the present disclosure. Referring to FIG. 1, the process 100 involves a UE 102, a base station 104 (e.g., a BS, gNB, eNB, and so on), and a UE 106. An uplink transmission diagram 130 illustrates uplink activities for the UE 102. An uplink transmission diagram 110 illustrates uplink transmission activities for the UE 106. A downlink transmission diagram 120 illustrates downlink activities of the base station 104. The diagrams 110, 120, and 130 show slots divided in the time domain (denoted by the x-axis). In some examples, the dimension or axis of each of the diagrams 110, 120, and 130 that is perpendicular to the time domain axis represents frequency such as but not limited to, a bandwidth, an active uplink bandwidth part (BWP), and so on, although frequency is discontinuous across the different diagrams 110, 120, and 130.

The UE 102 sends a scheduling request (SR) 132 to the base station 104. The SR 132 requests the base station 104 for uplink transmission resource for uplink service such as but not limited to, an enhanced mobile broadband (eMBB) service. The base station 104 allocates the uplink transmission resource (e.g., a PUSCH 134) for the UE 102 via uplink grant (UL grant) 122. The base station 104 sends the UL grant 122 to the UE 102 to notify the UE 102 that the UE 102 can transmit the uplink service using the PUSCH 134.

After the UE 102 sends the SR 132 to the base station 104, and after the base station 104 sends the UL grant 122 to the UE 102, the UE 106 sends an SR 112 to the base station 104. The SR 132 requests the base station 104 for uplink transmission resource for uplink service such as but not limited to, an ultra-reliable low latency communications (URLLC) service. Given that the uplink service (e.g., the URLLC service) of the UE 106 has ultra-high reliability and ultra-low-latency transmission requirements, the base station 104 allocates uplink transmission resource that is as early in time as possible. The base station 104 determines that the uplink transmission resource (e.g., a PUSCH 114) that satisfies the ultra-high reliability and ultra-low-latency transmission requirements may have already been allocated to the UE 102. That is, the base station 104 determines that at least a portion of the PUSCH 134 collides (e.g., overlaps in time) with at least a portion of the PUSCH 114. In response to determining that the priority of the uplink service (e.g., the URLLC service) of the UE 106 is higher than the priority of the uplink service (e.g., the eMBB service) of the UE 102, the base station 104 cancels the transmission of the UE 102 on the previously allocated uplink transmission resource (e.g., the PUSCH 134).

The low-priority uplink transmission can be canceled using various methods. In one example, the base station 104 reschedules a new uplink transmission resource (e.g., PUSCH 136) for the UE 102 and then cancels the uplink transmission on the originally allocated uplink transmission resource (e.g., the PUSCH 134). The base station 104 can retransmit a UL grant 126 to the UE 102 to notify the UE 102 that the UE 102 can transmit the uplink service using the PUSCH 136 (e.g., the transmission is rescheduled to another uplink transmission resource PUSC 136). In some examples, the base station 104 can transmit the UL grant 126 at the same time (e.g., within a same time slot) as the UL grant 124, using different frequency resources. The HARQ process identifier (ID) of the UL grant 126 is the same as the HARQ process ID of the UL grant 122. A new data indicator (NDI) field of the UL grant 126 is toggled, thus indicating that the uplink grant 126 corresponds to the uplink service (e.g., the eMBB service) for which uplink transmission resource (e.g., the PUSCH 134) was previously allocated and that the previously allocated uplink transmission resource (e.g., the PUSCH 134) is released. In some examples, the entire originally allocated uplink transmission resource (e.g., the PUSCH 134) or a portion thereof can be rescheduled and released using such method. Also, an entire transport block (TB) or a portion thereof can be transmitted using the new uplink transmission resource (e.g., the PUSCH 136).

In another example, the base station 104 can notify the UE 102 that the originally allocated uplink transmission resource (e.g., the PUSCH 134) is preempted by the high-priority service transmission using cancelation indication signaling (e.g., the UL CI). Accordingly, the UE 102 cancels the transmission on the preempted resource (e.g., the PUSCH 134) in response to receiving the cancelation indication signaling. The cancelation indication signaling can be carried in the physical DCI on the downlink control channel or another specific signal sequence.

The cancelation indication signaling is signaling used to indicate or otherwise identify time-frequency domain resource to be canceled. Indication methods such as but not limited to, Method 1 and Method 2 can be implemented for indicating the time-frequency domain resource.

Method 1:

For a serving cell,

- $N_{CI}$ is a number of bits provided by CI-PayloadSize, which represents a field size for each UL cancelation indicator per serving cell;
- $B_{CI}$ is a number of Physical Resource Blocks PRBs provided by frequencyRegionforCI in timeFrequencyRegion, which represents a number of PRBs of a RUR;
- $T_{CI}$ is a number of symbols provided by timeDurationforCI in timeFrequencyRegion, which represents a number of symbols of the RUR, in some embodiments; in other embodiments, $T_{CI}$ is a number of symbols provided by timeDurationforCI in timeFrequencyRegion minus a number of symbols indicated as downlink by *tdd-UL-DL-ConfigurationCommon* within RUR (if the UE is provided *tdd-UL-DL-ConfigurationCommon),* are excluded from the RUR; and
- $G_{CI}$ is a number of symbols provided by timeGranularityforCI in timeFrequencyRegion, which represents time domain granularity of cancelation indication.

In some examples, $N_{SI} = \lceil T_{CI}/G_{CI} \rceil$ bits of a field in UL CI (e.g., in DCI format 2_4) have one-to-one mapping with $N_{SI}$ groups of symbols, where each of the first $N_{SI} - T_{CI} + \lfloor T_{CI}/N_{SI} \rfloor \cdot N_{SI}$ groups includes $\lfloor T_{CI}/N_{SI} \rfloor$ symbols, and each of the remaining $T_{CI} - \lfloor T_{CI}/N_{SI} \rfloor \cdot N_{SI}$ groups includes $\lceil T_{CI}/N_{SI} \rceil$ symbols. A UE does not expect $N_{CI} < \lceil T_{CI}/G_{CI} \rceil$.

In some examples, $M_{CI}$ groups of symbols from $N_{SI}$ groups of symbols contain cancelation resource. $M_{CI}$ sets of $N_{BI} = \lfloor (N_{CI} - N_{SI})/M_{CI} \rfloor$ bits of a field in UL CI have one-to-one mapping with $M_{CI}$ groups of symbols.

For a symbol group, $N_{BI}$ bits in each set of bits have one-to-one mapping with $N_{BI}$ groups of PRBs, where each of the first $N_{BI} - B_{CI} + \lfloor B_{CI}/N_{BI} \rfloor \cdot N_{BI}$ groups includes $\lfloor B_{CI}/N_{BI} \rfloor$ PRBs, and each of the remaining $B_{CI} - \lfloor B_{CI}/N_{BI} \rfloor \cdot N_{BI}$ groups includes $\lceil B_{CI}/N_{BI} \rceil$ PRBs.

Method 2:

For a serving cell,

- $N_{CI}$ is a number of bits provided by CI-PayloadSize, which represents a field size for each UL cancelation indicator per serving cell;
- $B_{CI}$ is a number of PRBs provided by frequencyRegionforCI in timeFrequencyRegion, which represents a number of PRBs of the RUR;
- $T_{CI}$ is a number of symbols provided by timeDurationforCI in timeFrequencyRegion, which represents a number of symbols of the RUR, in some embodiments; In other embodiments, $T_{CI}$ is a number of symbols provided by timeDurationforCI in timeFrequencyRegion minus a number of symbols indicated as downlink by *tdd-UL-DL-ConfigurationCommon* within RUR (if the UE is provided *tdd-UL-DL-ConfigurationCommon*), are excluded from the RUR; and
- $N_{SI}$ is a number of symbols groups provided by timeGranularityforCI in timeFrequencyRegion, which represents time domain granularity of cancelation indication.

$N_{SI}$ bits of a field in UL CI (e.g., in DCI format 2_4) have one-to-one mapping with $N_{SI}$ groups of symbols where each of the first $N_{SI} - T_{CI} + \lfloor T_{CI}/N_{SI} \rfloor \cdot N_{SI}$ groups includes $\lfloor T_{CI}/N_{SI} \rfloor$ symbols and each of the remaining $T_{CI} - \lfloor T_{CI}/N_{SI} \rfloor \cdot N_{SI}$ groups includes $\lceil T_{CI}/N_{SI} \rceil$ symbols. A UE does not expect $N_{SI} < N_{CI}$.

In some examples, $M_{CI}$ groups of symbols from $N_{SI}$ groups of symbols contain cancelation resource. $M_{CI}$ sets of $N_{BI} = \lfloor (N_{CI} - N_{SI})/M_{CI} \rfloor$ bits of a field in UL CI have one-to-one mapping with $M_{CI}$ groups of symbols.

For a symbol group, $N_{BI}$ bits in each set of bits have one-to-one mapping with $N_{BI}$ groups of PRBs, where each of the first $N_{BI} - B_{CI} + \lfloor B_{CI}/N_{BI} \rfloor \cdot N_{BI}$ groups includes $\lfloor B_{CI}/N_{BI} \rfloor$ PRBs, and each of the remaining $B_{CI} - \lfloor B_{CI}/N_{BI} \rfloor \cdot N_{BI}$ groups includes $\lceil B_{CI}/N_{BI} \rceil$ PRBs.

In yet another example, the base station 104 can instruct the UE 102 to reduce transmission power to zero on the entire originally allocated uplink transmission resources (e.g., the PUSCH 134) or a portion thereof, to indirectly cancel the transmission on the entire originally allocated uplink transmission resource (e.g., the PUSCH 134) or a portion thereof, respectively. Accordingly, in response to receiving transmission power reduction commands/signals from the base station 104, the UE 102 cancels transmission on the entire originally allocated uplink transmission resource (e.g., the PUSCH 134) or a portion thereof.

In some embodiments, the PUSCH (e.g., the PUSCH 134) is an example of uplink transmission resources capable of carrying data for both low-priority services and high-priority services. A scheme similar to the scheme for canceling uplink transmission on the PUSCH 134 can be implemented for canceling one or more other types of uplink transmissions with lower priority such as but not limited to, those uplink transmissions on a physical uplink control channel (PUCCH), Sounding Reference Signal (SRS), Physical Random Access Channel (PRACH), and so on, due to preemption in favor of one or more other types of uplink transmissions with higher priority. The other types of uplink transmissions can be uplink transmissions communicated on the PUCCH, SRS, PRACH, and so on.

In other examples, slot format can be configured in different ways. For example, a base station can configure a semi-static slot format via suitable Radio Resource Control (RRC) signaling (e.g., TDD-UL-DL-ConfigCommon or TDD-UL-DL-ConfigDedicated). The TDD-UL-DL-ConfigCommon is a cell-specific parameter. The TDD-UL-DL-ConfigCommon parameter is adapted for and effective to all or a group of UEs in a same cell, such that all or a group of UEs in the same cell can configure the same slot format according to the same TDD-UL-DL-ConfigCommon parameter. TDD-UL-DL-ConfigDedicated is a UE-specific parameter. Different UEs can configure different slot formats according to different TDD-UL-DL-ConfigDedicated parameters.

Resource types in semi-static slot formats include semi-static downlink resources (e.g., semi-static downlink slots and/or symbols), semi-static flexible resources (semi-static flexible slots and/or symbols), and semi-static uplink resources (semi-static uplink slots and/or symbols). Semi-static flexible resource can be further configured by the base station as uplink resource or downlink resource by dynamic slot format configuration. In other words, uplink transmission (e.g., PUSCH) or downlink transmission (e.g., PDSCH) can be scheduled on the semi-static flexible resource. The UE still needs to monitor the PDCCH in the corresponding PDCCH monitoring occasions scheduled or located at the semi-static flexible resource.

In another examples, the base station can configure a dynamic slot format via PDCCH (e.g., in the DCI format 2-0). Resource types in dynamic slot formats include dynamic downlink resources (e.g., dynamic downlink slots and/or symbols), dynamic flexible resources (e.g., dynamic flexible slots and/or symbols), and dynamic uplink resources (dynamic uplink slots and/or symbols). The UE does not need monitoring the PDCCH in the corresponding PDCCH monitoring occasions scheduled or located at the dynamic flexible resource.

The disclosed embodiments define a mechanism for the UE to determine the UL CI to monitor in connection with the slot format.

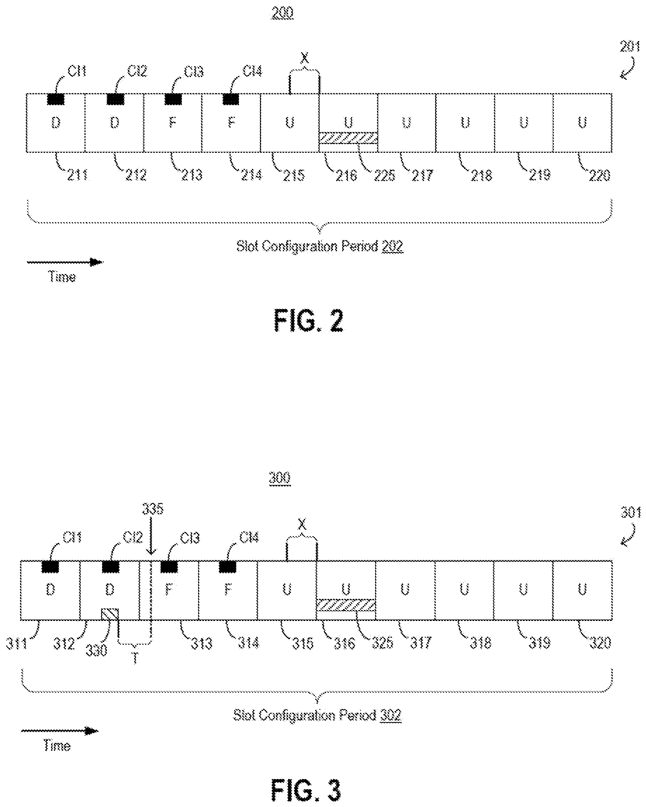

FIG. 2 is a schematic diagram illustrating a method 200 for determining a UL CI monitoring occasion, in accordance with some embodiments of the present disclosure. Referring to FIG. 2, the method 200 is performed by a UE. In some embodiments, a base station can configure a semi-static slot format 201 via suitable RRC signaling (e.g., TDD-UL-DL-ConfigCommon). As shown, the semi-static slot format 201 includes 10 slots 211-220 within a slot configuration period 202. In other words, the slot configuration period 202 is divided (in the time domain, denoted by the horizontal axis as shown) into the slots 212-220. The dimension or axis of FIG. 2 that is perpendicular to the time domain axis represents frequency such as but not limited to, a bandwidth, an active BWP, and so on. The resource types of the slots 211-220 are configured as "DDFFUUUUUU," where "D" denotes semi-static downlink slots 211 and 212, "F" denotes semi-static flexible slots 213 and 214, and "U" denotes semi-static uplink slots 215-220.

In some examples, all symbols in each of the slots 211-220 have a unified type. For example, all symbols in the slots 211 and 212 are downlink symbols. All symbols in the slots 213 and 214 are flexible symbols. All symbols in the slots 215-220 are uplink symbols. In other examples, one or more of the slots 211-220 can each contain two or more types of symbols. That is, the symbols in a given slot can be configured as different symbol types. For example, some symbols in a slot are configured as one of downlink symbols, flexible symbols, and uplink symbols while other symbols in the same slot can be configured as other ones of the downlink symbols, flexible symbols, and uplink symbols.

The semi-static slot format 201 includes UL CI monitoring occasions denoted as CI1, CI2, CI3, and CI4. Each of the UL CI monitoring occasions CI1-CI4 corresponds to one or more symbols. Low-priority uplink transmission (e.g., PUSCH 225) is scheduled via DCI (received from the base station) or configured via RRC signaling. As shown, the PUSCH 225 is scheduled in the semi-static uplink slot 216.

The UE can monitor one or more of the UL CI monitoring occasions CI1-CI4 for the UL CI, which indicates whether the uplink transmission (e.g., the PUSCH 225) is canceled. The UL CI monitoring occasions CI1-CI4 are all available monitoring occasions in the slot configuration period 202 for receiving the UL CI. The UE selects one of the UL CI monitoring occasions CI1-CI4 (referred to as a beginning UL CI monitoring occasion) to begin monitoring for the UL CI.

In some embodiments, the UE begins the monitoring in an UL CI monitoring occasion that is the latest UL CI monitoring occasion located in a downlink symbol (e.g., as indicated by the TDD-UL-DL-ConfigCommon) that ends (e.g., having an end position that is) no later than a predetermined number (e.g., X) of symbols before a start position of the uplink transmission of the PUSCH 225. The predetermined number of symbols (e.g., a predetermined time interval) corresponds to a UL CI processing time (e.g., a time interval needed by the UE to decode the UL CI and cancel the corresponding UL transmission). The predetermined time interval can be defined in the specification or can also be configured by the base station. In other words, the UE monitors the UL CI in one or more UL CI monitoring occasions including a beginning UL CI monitoring occasion and one or more UL CI monitoring occasions (if any) within the slot configuration period 202 that are after the beginning UL CI monitoring occasion.

The base station may not transmit the UL CI located at a semi-static flexible resource (e.g., the UL CI monitoring occasions CI3 and CI4 in the slots 213 and 214, respectively) given that the semi-static flexible resource can be configured as uplink resource instead of a downlink resource. Accordingly, in some embodiments, the UL CI monitoring occasions CI3 and CI4 located in the flexible slots 213 and 214 cannot be the beginning UL CI monitoring occasion.

As shown, the ending positions of all of the UL CI monitoring occasions CI1-CI4 are no later than X symbols before the start of the UL transmission of the PUSCH 225. In the examples in which the TDD-UL-DL-ConfigCommon indicates that the UL CI monitoring occasions CI1 and CI2 are located in downlink symbols, the UL CI monitoring occasion CI2 is the latest UL CI monitoring occasion in a downlink symbol. Accordingly, the UE determines that the UL CI monitoring occasion CI2 is the beginning UL CI monitoring occasion given that the UL CI monitoring occasion CI2 satisfies the conditions.

In some embodiments, the beginning UL CI monitoring occasion CI2 can indicate canceled transmissions on all of the semi-static flexible resources (e.g., slots 213 and 214) and uplink resources (e.g., slots 216-220) within the slot configuration period 202.

Accordingly, the method 200 allow the UE to monitor a minimum number of UL CI occasions while not missing any UL CI.

In some embodiments, the base station can configure the semi-static slot format 201 via suitable RRC signaling. The RRC signaling includes TDD-UL-DL-ConfigCommon, the TDD-UL-DL-ConfigDedicated, or a combination thereof. That is, the semi-static slot format 201 can be configured according to both the TDD-UL-DL-ConfigCommon and the TDD-UL-DL-ConfigDedicated in some embodiments. For example, in some embodiments, the UE begins the monitoring in an UL CI monitoring occasion that is the latest UL CI monitoring occasion located in a downlink symbol (e.g., as indicated by the TDD-UL-DL-ConfigCommon and/or the TDD-UL-DL-ConfigDedicated) that ends (e.g., having an end position that is) no later than a predetermined number (e.g., X) of symbols before a start position of the uplink transmission of the PUSCH 225. In that regard, the UE can determine that the ending positions of all of the UL CI monitoring occasions CI1-CI4 are no later than X symbols before the start of the UL transmission of the PUSCH 225. In the examples in which the TDD-UL-DL-ConfigCommon and/or the TDD-UL-DL-ConfigDedicated indicates that the UL CI monitoring occasions CI1 and CI2 are located in downlink symbols, the UL CI monitoring occasion CI2 is the latest UL CI monitoring occasion in a downlink symbol. Accordingly, the UE determines that the UL CI monitoring occasion CI2 is the beginning UL CI monitoring occasion.

In some embodiments, the UE begins the monitoring in an UL CI monitoring occasion that is the latest UL CI monitoring occasion that ends (e.g., having an end position that is) no later than a predetermined number (e.g., X) of symbols before a start position of the uplink transmission of the PUSCH 225. The beginning UL CI monitoring occasion is selected from the available UL CI monitoring occasions CI1-CI4 without considering the resource type for the beginning UL CI monitoring occasion. That is, the beginning UL CI monitoring occasion is selected without considering whether the beginning UL CI monitoring occasion is located in a downlink symbol. In that regard, as shown, the UE can determine that the ending positions of all of the available UL CI monitoring occasions CI1-CI4 are no later than X symbols before the start of the UL transmission of the PUSCH 225. Accordingly, the UE determines that the UL CI monitoring occasion CI4, which can be in a flexible symbol, is the beginning UL CI monitoring occasion.

In this case, given that the UE does not monitor the UL CI monitoring occasions CI1-CI3, the base station is configured to send the UL CI on the UL CI monitoring occasion CI4 to ensure that the UE is notified of the cancelation of the uplink transmission. Therefore, in such embodiments, the network side cannot configure the flexible symbol corresponding to the UL CI monitoring occasion CI4 to be an uplink symbol and cannot schedule uplink transmission in the flexible symbol corresponding to the UL CI monitoring occasion CI4. In other words, the UE does not expect the flexible symbol corresponding to the monitoring occasion to be configured as an uplink symbol. The UE does not expect uplink transmission to be scheduled in the flexible symbol corresponding to the monitoring occasion, meaning that from the perspective of the UE, transmission other than uplink transmission can be scheduled in the flexible symbol corresponding to the monitoring occasion.

FIG. 3 is a schematic diagram illustrating a method 300 for determining a UL CI monitoring occasion, in accordance with some embodiments of the present disclosure. Referring to FIG. 3, the method 300 is performed by a UE. In some embodiments, a base station can configure a semi-static slot format 301 via suitable RRC signaling. The RRC signaling includes TDD-UL-DL-ConfigCommon, the TDD-UL-DL-ConfigDedicated, or a combination thereof. As shown, the semi-static slot format 301 includes 10 slots 311-320 within a slot configuration period 302. In other words, the slot configuration period 302 is divided (in the time domain, denoted by the horizontal axis as shown) into the slots 312-320. The dimension or axis of FIG. 3 that is perpendicular to the time domain axis represents frequency such as but not limited to, a bandwidth, an active BWP, and so on. The resource types of the slots 311-320 are configured as "DDFFUUUUUU," where "D" denotes semi-static downlink slots 311 and 312, "F" denotes semi-static flexible slots 313 and 314, and "U" denotes semi-static uplink slots 315-320.

In some examples, all symbols in each of the slots 311-320 have a unified type. For example, all symbols in the slots 311 and 312 are downlink symbols. All symbols in the slots 313 and 314 are flexible symbols. All symbols in the slots 315-320 are uplink symbols. In other examples, one or more of the slots 311-320 can each contain two or more types of symbols. That is, the symbols in a given slot can be configured as different symbol types. For example, some symbols in a slot are configured as one of downlink symbols, flexible symbols, and uplink symbols while other symbols in the same slot can be configured as other ones of the downlink symbols, flexible symbols, and uplink symbols.

The semi-static slot format 301 includes UL CI monitoring occasions denoted as CI1, CI2, CI3, and CI4. Each of the UL CI monitoring occasions CI1-CI4 corresponds to one or more symbols. Low-priority uplink transmission (e.g.,

PUSCH 325) is scheduled via a scheduling DCI 330. The scheduling DCI 330 is received from the base station within the downlink slot 312. As shown, the PUSCH 325 is scheduled in the semi-static uplink slot 316 according to the scheduling DCI 330. A DCI processing time T corresponds to a time interval needed by the UE to decode the scheduling DCI 330.

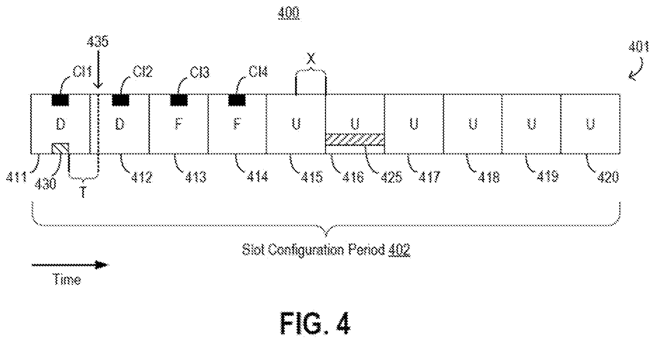

FIG. 4 is a schematic diagram illustrating a method 400 for determining a UL CI monitoring occasion, in accordance with some embodiments of the present disclosure. Referring to FIG. 4, the method 400 is performed by a UE. In some embodiments, a base station can configure a semi-static slot format 401 via suitable RRC signaling. The RRC signaling includes TDD-UL-DL-ConfigCommon, the TDD-UL-DL-ConfigDedicated, or a combination thereof. As shown, the semi-static slot format 401 includes 10 slots 411-420 within a slot configuration period 402. In other words, the slot configuration period 402 is divided (in the time domain, denoted by the horizontal axis as shown) into the slots 412-420. The dimension or axis of FIG. 4 that is perpendicular to the time domain axis represents frequency such as but not limited to, a bandwidth, an active BWP, and so on. The resource types of the slots 411-420 are configured as "DDFFUUUUUU," where "D" denotes semi-static downlink slots 411 and 412, "F" denotes semi-static flexible slots 413 and 414, and "U" denotes semi-static uplink slots 415-420.

In some examples, all symbols in each of the slots 411-420 have a unified type. For example, all symbols in the slots 411 and 412 are downlink symbols. All symbols in the slots 413 and 414 are flexible symbols. All symbols in the slots 415-420 are uplink symbols. In other examples, one or more of the slots 411-420 can each contain two or more types of symbols. That is, the symbols in a given slot can be configured as different symbol types. For example, some symbols in a slot are configured as one of downlink symbols, flexible symbols, and uplink symbols while other symbols in the same slot can be configured as other ones of the downlink symbols, flexible symbols, and uplink symbols.

The semi-static slot format 401 includes UL CI monitoring occasions denoted as CI1, CI2, CI3, and CI4. Each of the UL CI monitoring occasions CI1-CI4 corresponds to one or more symbols. Low-priority uplink transmission (e.g., PUSCH 425) is scheduled via a scheduling DCI 430. The scheduling DCI 430 is received from the base station within the downlink slot 411. As shown, the PUSCH 425 is scheduled in the semi-static uplink slot 416 according to the scheduling DCI 430. A DCI processing time T corresponds to a time interval needed by the UE to decode the scheduling DCI 430.

With reference to FIGS. 3 and 4, the UE can monitor one or more of the UL CI monitoring occasions CI1-CI4 for the UL CI, which indicates whether the uplink transmission (e.g., the PUSCH 325 or 425) is canceled. The UL CI monitoring occasions CI1-CI4 are all available monitoring occasions in the slot configuration period 302 or 402 for receiving the UL CI. The UE selects one of the UL CI monitoring occasions CI1-CI4 (referred to as a beginning UL CI monitoring occasion) to begin monitoring for the UL CI. In other words, the UE monitors the UL CI in one or more UL CI monitoring occasions including a beginning UL CI monitoring occasion and one or more UL CI monitoring occasions (if any) within the slot configuration period 202 or 302 that are after the beginning UL CI monitoring occasion.

In some embodiments, the UE first determines whether any of the available UL CI monitoring occasions are in semi-static downlink symbols that are after the decoding of the scheduling DCI. For example, decoding of the scheduling DCI 330 ends at 335. Decoding of the scheduling DCI 430 ends at 435. That is, the UE first determines whether any of the available UL CI monitoring occasions in a semi-static downlink symbols has a start position that is after T after the end position of the scheduling DCI. In some embodiments, the semi-static downlink symbols are downlink symbols indicated by RRC signaling TDD-UL-DL-ConfigCommon. In other embodiments, the semi-static downlink symbols are downlink symbols indicated by RRC signaling TDD-UL-DL-ConfigCommon or TDD-UL-DL-ConfigDedicated.

In response to determining that at least one of the available UL CI monitoring occasions is in a semi-static downlink symbol that is after the decoding of the scheduling DCI, the UE begins the monitoring in an UL CI monitoring occasion that is the latest UL CI monitoring occasion located in a downlink symbol (e.g., as indicated by the TDD-UL-DL-ConfigCommon) that ends (e.g., having an end position that is) no later than a predetermined number (e.g., X) of symbols before a start position of the uplink transmission of the PUSCH 325 or 425. The predetermined number of symbols (e.g., a predetermined time interval) corresponds to a UL CI processing time (e.g., a time interval needed by the UE to decode UL CI and cancel the corresponding UL transmission). The predetermined time interval can be defined in the specification or can also be configured by base station.

On the other hand, in response to determining that none of the available UL CI monitoring occasions is in a semi-static downlink symbol that is after the decoding of the scheduling DCI, the UE begins the monitoring in an UL CI monitoring occasion that is the latest one of the available UL CI monitoring occasions that ends (e.g., having an end position that is) no later than a predetermined number (e.g., X) of symbols before a start position of the uplink transmission of the PUSCH. In other words, the beginning UL CI monitoring occasion is selected from the available UL CI monitoring occasions CI1-CI4 without considering the resource type for the beginning UL CI monitoring occasion. That is, in response to determining that none of the available UL CI monitoring occasions is in a semi-static downlink symbol that is after decoding the scheduling DCI, the beginning UL CI monitoring occasion is selected without considering whether the beginning UL CI monitoring occasion is located in a downlink symbol.

As shown in FIG. 3, decoding of the scheduling DCI 330 ends at 335. In the embodiments in which none of the available UL CI monitoring occasions CI1-CI4 is in a semi-static downlink symbol that is after the decoding of the scheduling DCI 330 completes at 335, the UE determines that the UL CI monitoring occasion CI4 is the latest one of the available UL CI monitoring occasions CI1-CI4 that ends (e.g., having an end position that is) no later than a predetermined number (e.g., X) of symbols before a start position of the uplink transmission of the PUSCH 325. Accordingly, the UE determines that the UL CI monitoring occasion CI4, which can be in a flexible symbol, is the beginning UL CI monitoring occasion.

In this case, given that the UE does not monitor the UL CI monitoring occasions CI1-CI3, the base station is configured to send the UL CI on the UL CI monitoring occasion CI4 to ensure that the UE is notified of the cancelation of the uplink transmission. Therefore, in such embodiments, the network side cannot configure the flexible symbol corresponding to the UL CI monitoring occasion CI4 to be an uplink symbol and cannot schedule uplink transmission in the flexible symbol corresponding to the UL CI monitoring occasion CI4.

A shown in FIG. 4, decoding of the scheduling DCI 430 ends at 435. The UL CI monitoring occasion CI2 is in a semi-static downlink symbol (in slot 412) that is after the decoding of the scheduling DCI 430. Accordingly, the UE begins the monitoring in the UL CI monitoring occasion CI2, which is the latest UL CI monitoring occasion (out of the available UL CI monitoring occasions CI1-CI4) that is located in a downlink symbol (e.g., as indicated by the TDD-UL-DL-Config-Common) that ends (e.g., having an end position that is) no later than a predetermined number (e.g., X) of symbols before the start position of the uplink transmission of the PUSCH 425. The predetermined number of symbols (e.g., a predetermined time interval) corresponds to a UL CI processing time (e.g., a time interval needed by the UE to decode the UL CI and cancel the corresponding UL transmission).

In some embodiments, the UE first determines whether any of the available UL CI monitoring occasions are in semi-static downlink symbols that are after the decoding of the scheduling DCI. That is, the UE first determines whether any of the available UL CI monitoring occasions in a semi-static downlink symbols has a start position that is after T after the end position of the scheduling DCI.

In response to determining that at least one of the available UL CI monitoring occasions is in a semi-static downlink symbol that is after the decoding of the scheduling DCI, the UE begins the monitoring in an UL CI monitoring occasion (e.g., the UL CI monitoring occasion CI2 in FIG. 4) that is the latest UL CI monitoring occasion located in a downlink symbol (e.g., as indicated by the TDD-UL-DL-ConfigCommon) that ends (e.g., having an end position that is) no later than a predetermined number (e.g., X) of symbols before a start position of the uplink transmission of the PUSCH.

On the other hand, in response to determining that none of the available UL CI monitoring occasions is in a semi-static downlink symbol that is after the decoding of the scheduling DCI 330, the UE begins the monitoring in an UL CI monitoring occasion that is the earliest one of the available UL CI monitoring occasions that starts after the decoding of the scheduling DCI 330.

As shown in FIG. 3, decoding of the scheduling DCI 330 ends at 335. In the embodiments in which none of the available UL CI monitoring occasions CI1-CI4 is in a semi-static downlink symbol that is after the decoding of the scheduling DCI 330 completes at 335, the UE determines that the UL CI monitoring occasion CI3 is the earliest one of the available UL CI monitoring occasions CI1-CI4 that starts (e.g., having a start position that is) after the decoding of the scheduling DCI 330 completes at 335. Accordingly, the UE determines that the UL CI monitoring occasion CI3, which can be in a flexible symbol, is the beginning UL CI monitoring occasion.

In this case, given that the UE does not monitor the UL CI monitoring occasions CI1-CI2, the base station is configured to send the UL CI on one or both of the UL CI monitoring occasion CI3 or CI4 to ensure that the UE is notified of the cancelation of the uplink transmission. Therefore, in such embodiments, the network side cannot configure the flexible symbol corresponding to one or both of the UL CI monitoring occasion CI3 or CI4 to be an uplink symbol and cannot schedule uplink transmission in the flexible symbol corresponding to one or both of the UL CI monitoring occasion CI3 or CI4.

In some embodiments, enabling indicator can be introduced to indicate whether to use one of the mechanisms (described herein with reference to FIGS. 2-4) the UE needs to adopt for determining the beginning UL CI monitoring occasion to be monitored. In some examples, the network side (including the base station) can send the enabling indicator to the UE in a system broadcast message (e.g. in system information block 1) or UE-specific RRC signaling. In response to receiving the enabling indicator which indicates one of the mechanisms described herein is enabled (e.g., on the network side), the UE determines the beginning UL CI monitoring occasion to be monitored using that mechanism. Accordingly, both the terminal side and the network side are in agreement as to the mechanism used to determine the beginning UL CI monitoring occasion. The UE does not monitor any of the UL CI monitoring occasions before the beginning UL CI monitoring occasion.

In some embodiments, if the mechanism is not enabled, the behavior of the UE to monitor the UL CI is not limited. In some examples, the UE monitors the UL CI monitoring occasions that are after the PDCCH on which the PUSCH is scheduled is decoded. Alternatively, in some examples, the UE monitors all UL CI monitoring occasions corresponding to a RUR where the PUSCH is located.

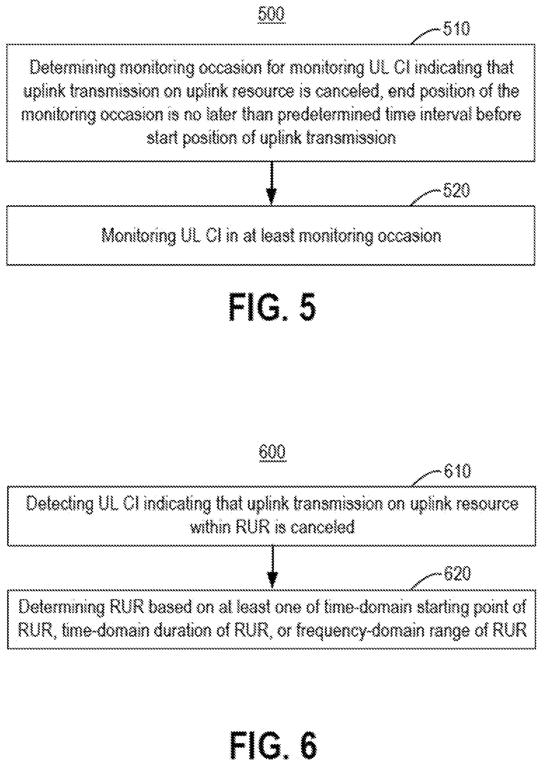

FIG. 5 is a flowchart diagram illustrating an example method 500 for monitoring UL CI, in accordance with some embodiments of the present disclosure. Referring to FIGS. 2-5, the methods 200-400 can be particular implementations of the method 500. The method 500 can be performed on a UE.

At 510, the UE determines a monitoring occasion (e.g., an UL CI monitoring occasion) for monitoring UL CI indicating that uplink transmission on an uplink resource is canceled. An end position of the monitoring occasion is no later than a predetermined time interval before a start position of the uplink transmission. The predetermined time interval corresponds to a time interval needed by the UE to process the UL CI.

In some embodiments, the monitoring occasion is configured to be in a downlink symbol according to RRC signaling. In some examples, the RRC signaling includes a cell-specific parameter that configures a same slot format for a plurality of UEs in a same cell. The plurality of UEs includes the UE. For instance, the RRC signaling includes TDD-UL-DL-ConfigCommon. In some examples, the RRC signaling includes a UE-specific parameter that configures a slot format for the UE. For instance, the RRC signaling includes TDD-UL-DL-ConfigDedicated.

In some embodiments, a plurality of monitoring occasions is in downlink symbols. The monitoring occasion is the latest one of the plurality of monitoring occasions that ends no later than the predetermined time interval before the start position of the uplink resource. In some embodiments, the UL CI indicates canceled transmissions on all flexible slots and uplink slots within a slot configuration period.

In some embodiments, the monitoring occasion is configured to be in a downlink symbol according to RRC signaling. In some embodiments, the monitoring occasion is configured to be in a flexible symbol according to RRC signaling.

In some embodiments, the UE does not expect the flexible symbol corresponding to the monitoring occasion to be configured as an uplink symbol. The UE does not expect to be scheduled uplink transmission in the flexible symbol corresponding to the monitoring occasion.

In some embodiments, determining the monitoring occasion by the UE includes receiving by the UE from a base station, a scheduling DCI and determining, by the UE, whether at least one of a plurality of available monitoring occasions is in a semi-static downlink symbol that is after decoding of the scheduling DCI. In some examples, in response to determining that at least one of the plurality of available monitoring occasions is in the semi-static downlink symbol that is after the decoding of the scheduling DCI, the monitoring occasion is determined to be the latest one of the at least one of the plurality of monitoring occasions in the semi-static downlink symbol that ends no later than the predetermined time interval before the start position of the uplink resource.

In some examples, in response to determining that none of the plurality of available monitoring occasions is in the semi-static downlink symbol that is after the decoding of the scheduling DCI, the monitoring occasion is determined to be the latest one of the plurality of available monitoring occasions that ends no later than a predetermined time interval before the start position of the uplink resource. In other examples, in response to determining that none of the plurality of available monitoring occasions is in the semi-static downlink symbol that is after the decoding of the scheduling DCI, the monitoring occasion is determined to be the earliest one of the plurality of available monitoring occasions that starts after the decoding of the scheduling DCI.

In some embodiments, the UE receives from a base station enabling indicator indicating whether one of a plurality of mechanisms is used to determine the monitoring occasion. The enabling indicator is transmitted via a RRC signaling.

At 520, the UE monitors the UL CI in at least the monitoring occasion.

In some embodiments, the UL CI corresponds to a reference uplink time-frequency resource region (e.g., the RUR). In particular, the UL CI is used to indicate or otherwise identify a canceled uplink resource (e.g., PUSCH) within the RUR corresponding to the UL CI. Some embodiments relate to methods for configuring a location of the RUR time-frequency resource.

The location of the canceled RUR time-frequency resource can be determined based on at least one of a time-domain starting point of the RUR, a time-domain duration of the RUR, and a frequency-domain range of the RUR.

With regard to the time-domain starting point of the RUR, the RUR starts from a number of symbols after an ending symbol of the PDCCH CORESET which carries the UL CI. The number of symbols corresponds to a minimum processing time for UL cancelation (canceling the uplink transmission). The minimum processing time for the uplink cancelation depends on subcarrier spacing. For example, for a subcarrier spacing of 15 kHz, the minimum processing time is equal to 5 symbols at 15 kHz. For subcarrier spacing of 30 kHz, the minimum processing time is equal to 5.5 symbols at 30 kHz, and so on. Therefore, in response to the UE detecting the UL CI, the UE determines the time-domain starting point of the corresponding RUR based on the subcarrier spacing. The subcarrier spacing can be one of the subcarrier spacing of the ULCI, determined based on frequency range (FR) (e.g., the subcarrier spacing is 15 kHz for FR1, 60 kHz for FR2, and so on), the minimum of the subcarrier spacing of the UL CI and the subcarrier spacing of the PUSCH (e.g., the canceled resource) of the UE, or the subcarrier spacing configured by the base station.

With regard to the time-domain duration of the RUR, the base station configures a number of symbols, types of symbols, and so on included in the RUR as RRC layer parameters. The UE determines the time domain duration of the RUR based on the specified subcarrier spacing. The subcarrier spacing can be one of the subcarrier spacing of the ULCI, determined based on FR, the minimum of the subcarrier spacing of the UL CI and the subcarrier spacing of the PUSCH of the UE, or the subcarrier spacing configured by the base station.

With regard to the frequency-domain range of the RUR, the base station configures a frequency-domain start point of the RUR and a number of radio bearers (RBs) included in the RUR via RRC parameter. The frequency-domain start point and the number of RBs can be defined as independent parameters and indicated/signaled separately, in some examples. In other examples, the frequency-domain start point and the number of RBs can be defined as a joint parameter.

The frequency-domain start point can be defined as a frequency-domain offset from a frequency-domain reference point. In one example, the frequency-domain reference point is defined as point A, which is the frequency-domain center point of subcarrier 0 of RB0 for all subcarrier spacing within the carrier. Alternatively, the frequency-domain reference point is defined as the lowest usable subcarrier of subcarrier spacing 1.

The number of RBs can be determined based on the subcarrier spacing 2. The subcarrier spacing 1 and the subcarrier spacing 2 can each be determined by determining the subcarrier spacing of the ULCI, in some examples. In some examples, the subcarrier spacing 1 and the subcarrier spacing 2 can each be determined based on FR. In some examples, the subcarrier spacing 1 and the subcarrier spacing 2 can each be the minimum of the subcarrier spacing of the UL CI and the subcarrier spacing of the PUSCH of the UE. In some examples, the subcarrier spacing 1 and the subcarrier spacing 2 can each be configured by the base station.

In that regard, FIG. 6 is a flowchart diagram illustrating an example method 600 for determining a location of canceled uplink resource.

Referring to FIG. 6, the method 600 is performed by the UE.

At 610, a UE detects UL CI indicating that uplink transmission on an uplink resource within a RUR is canceled. At 620, the UE determines the RUR based on at least one of a time-domain starting point of the RUR, a time-domain duration of the RUR, or a frequency-domain range of the RUR.

In some embodiments, each of the time-domain starting point of the RUR, the time-domain duration of the RUR, and the frequency-domain range of the RUR is determined based on subcarrier spacing. The subcarrier spacing can be one of a subcarrier spacing of the UL CI, determined based on FR, a minimum of the subcarrier spacing of the UL CI and a subcarrier spacing of the canceled uplink transmission, or a subcarrier spacing configured by a base station

In 5G systems, repetition transmissions have been introduced for coverage enhancement and transmitting ultra-low latency and high-reliability service within a short time interval. In Release 15 Specification, slot-based repetitions have been defined. For example, a same TB is transmitted in multiple slots repeatedly. The TB can be transmitted once in one slot, and a same time domain resource assignment can be used for the TB transmission in each slot of the multiple slots.

For further improving performance of ultra-low latency and high-reliability services, further enhancement on repetition of one TB transmission will be done in Release 16 Specification, introducing mini-slot based repetition. That is, there can be one or more repetitions of a same TB within one slot. In some examples, one TB is transmitted repeatedly in several consecutive slots in a slot-boundary crossing manner.

In some embodiments, the serving node can indicate to the UE to transmit physical channel using one of two transmission modes. Taking PUSCH as an example, the first transmission mode is the transmission mode defined in Release 15, e.g., repetition transmission with granularity of slot. Then, slot-based aggregation can be implemented in dynamic grant cases, or slot-based repetition can be implemented in configured grant cases. The second transmission mode is the transmission mode defined in Release 16, e.g., repetition transmission of dynamic grant PUSCH or configured grant PUSCH with granularity of mini-slot. More specifically, the scheduling information of PUSCH is indicated by DCI in dynamic grant cases. The configured grant PUSCH can be further divided into two types. For Type 1 PUSCH, the scheduling information of PUSCH is indicted via RRC signaling. For Type 2 PUSCH, the scheduling information of PUSCH is indicated in the activate DCI.

In some embodiments, same information of time domain resource assignment (TDRA) can be shared by the two transmission modes described herein, e.g., the two transmission modes can correspond to a TDRA table. The TDRA table is showed in Table 1, including PUSCH mapping type, K2, Start and Length Indicator Value (SLIV), values of S and L, repetition number, and so on.

More specifically, PUSCH mapping type contains PUSCH mapping type A and PUSCH mapping type B. A difference between the two mapping types is different requirement of starting symbol position and length of time domain duration. Mini-slot repetition transmission is not supported in PUSCH mapping type A. K2 is slot offset between scheduling DCI and corresponding PUSCH. SLIV is an indicator of start symbol and number of symbols. The UE can determine a start symbol index and a number of symbols of PUSCH from the SLIV indication. S and L represent start symbol and number of symbols, respectively, and S+L can be larger than 14. The repetition number represents a number of PUSCH repetition transmissions. In some embodiments, the TDRA table is configured by a high layer. The specific time-domain scheduling information is indicated by RRC signaling or one entry indicated by DCI from the TDRA table. Another indication field can also be included in TDRA table as configured by high layer.

Table 1 TDRA table for the first transmission mode and the second transmission mode

| Index | PUSCH mapping type | K2 | SLIV | S | L | Repetition number |
|-------|--------------------|-----|------|---|---|-------------------|
| 1 | TypeB | 0 | 42 | 2 | 4 | 2 |

(continued)

| Index | PUSCH mapping type | K2 | SLIV | S | L | Repetition number |
|---|---|---|---|---|---|---|
| 2 | TypeA | 1 | 70 | 0 | 7 | 1 |
| 3 | TypeA | 1 | 70 | 0 | 7 | 2 |
| ... | ... | ... | ... | ... | ... | ... |

to the present embodiment allow determination of the time-domain allocation information of the repetition transmission PUSCH corresponding to different transmission modes according to a TDRA table by the UE.

In response to the second transmission mode being indicated to a UE, the mapping type of PUSCH transmission is determined according to at least one of the following methods:

Method 1: the UE not expecting to receive PUSCH mapping type in the TDRA information notified in the PUSCH scheduling information corresponds to PUSCH mapping type A.

Method 2: the PUSCH mapping type being in the TDRA information in the PUSCH scheduling information notified by a network node corresponds to PUSCH mapping type B.

Method 3: in response to determining that the PUSCH mapping type in the TDRA information in the PUSCH scheduling information received by a UE is PUSCH mapping type A, the UE sends PUSCH according to PUSCH mapping type B.

Method 4: in response to determining that the PUSCH mapping type in the TDRA information in the PUSCH scheduling information received by a UE is PUSCH mapping type A, the UE ignores the PUSCH mapping type in the TDRA information.

Method 5: in response to determining that the PUSCH mapping type in the TDRA information in the PUSCH scheduling information received by a UE is PUSCH mapping type B, the UE will send PUSCH according to PUSCH mapping type B.

Method 6: in response to determining that the PUSCH mapping type in the TDRA information in the PUSCH scheduling information received by a UE is PUSCH mapping type A, the UE does not transmit the PUSCH.

When the second transmission mode is indicated to a UE, the time domain position of PUSCH is determined according to at least one of the following methods:

Method 1: in response to determining that the SLIV in the TDRA information in the PUSCH scheduling information received by a UE is an invalid value, the UE determines the time-domain position of PUSCH according to the values of S and L.

In some examples, the invalid value of the SLIV refers to a value beyond the valid range of the SLIV or a value that equals to a specific value.

Method 2: in response to determining that the S and/or L in the TDRA information in the PUSCH scheduling information received by a UE is not configured, the UE determines the time-domain position of PUSCH according to SLIV.

Method 3: in response to determining that the S and/or L in the TDRA information in the PUSCH scheduling information received by a UE is an invalid value, the UE determines the time-domain position of PUSCH according to SLIV.

In some embodiments, the invalid values of the S and L refer to values beyond the valid range of the S and L or values that equal to specific values.

Method 4: for the second transmission mode, in response to a UE receiving the PUSCH scheduling information in which the S and L in the TDRA information are configured with valid values and the SLIV in the TDRA information is configured with a valid value, the UE determines the time domain position of PUSCH according to SLIV. Alternatively, the UE determines the time-domain position of PUSCH according to the values of S and L.

Upon the first transmission mode being indicated to a UE, the time-domain position of PUSCH is determined by the UE according to at least one of the following methods:

Method 1: in response to determining that the SLIV in the TDRA information in the PUSCH scheduling information received by a UE is not configured or the configured value is invalid, the UE determines the time-domain position of PUSCH according to S and L.

Further, a UE does not expect that a sum of S and L indicated in the TDRA information in the PUSCH scheduling information received is greater than 14.

In some embodiments, the sum of S and L indicated in the TDRA information in the PUSCH scheduling information notified by a network node is no larger than 14.

In some embodiments, in response to determining that the sum of S and L indicated in the TDRA information in the PUSCH scheduling information received by a UE is greater than 14, the UE transmits PUSCH according to the sum of S and L less than or equal to 14.

Further, the invalid value of the SLIV refers to a value beyond the valid range of the SLIV or a value that equals to a specific value.

While the present embodiments are described with reference to uplink PUSCH as an example, the repetition transmission information can also be carried in PDSCH, PDCCH, and so on.

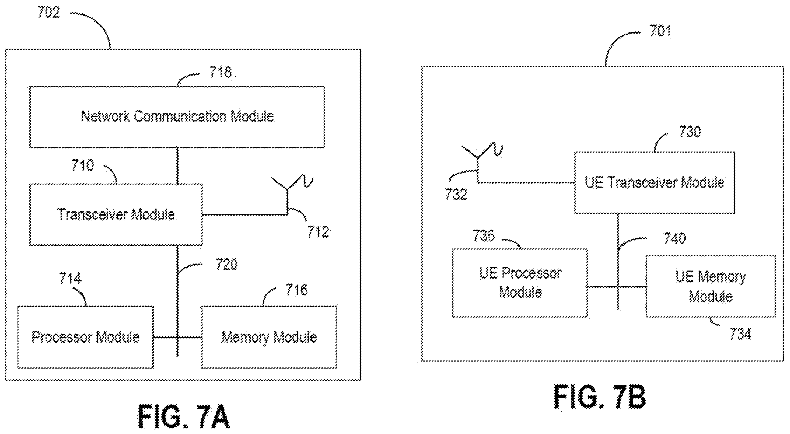

FIG. 7A illustrates a block diagram of an example base station 702, in accordance with some embodiments of the present disclosure. FIG.7B illustrates a block diagram of an example UE 701, in accordance with some embodiments of the present disclosure. Referring to FIGS. 1-7B, the UE 701 (e.g., a wireless communication device, a terminal, a mobile device, a mobile user, and so on) is an example implementation of the UEs described herein, and the base station 702 is an example implementation of the base station described herein.

The base station 702 and the UE 701 can include components and elements configured to support known or conventional operating features that need not be described in detail herein. In one illustrative embodiment, the base station 702 and the UE 701 can be used to communicate (e.g., transmit and receive) data symbols in a wireless communication environment, as described above. For instance, the base station 702 can be a base station (e.g., gNB, eNB, and so on), a server, a node, or any suitable computing device used to implement various network functions.

The base station 702 includes a transceiver module 710, an antenna 712, a processor module 714, a memory module 716, and a network communication module 718. The module 710, 712, 714, 716, and 718 are operatively coupled to and interconnected with one another via a data communication bus 720. The UE 701 includes a UE transceiver module 730, a UE antenna 732, a UE memory module 734, and a UE processor module 736. The modules 730, 732, 734, and 736 are operatively coupled to and interconnected with one another via a data communication bus 740. The base station 702 communicates with the UE 701 or another base station via a communication channel, which can be any wireless channel or other medium suitable for transmission of data as described herein.

As would be understood by persons of ordinary skill in the art, the base station 702 and the UE 701 can further include any number of modules other than the modules shown in FIGS. 7A and 7B. The various illustrative blocks, modules, circuits, and processing logic described in connection with the embodiments disclosed herein can be implemented in hardware, computer-readable software, firmware, or any practical combination thereof. To illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. The embodiments described herein can be implemented in a suitable manner for each particular application, but any implementation decisions should not be interpreted as limiting the scope of the present disclosure.

In accordance with some embodiments, the UE transceiver 730 includes a radio frequency (RF) transmitter and a RF receiver each including circuitry that is coupled to the antenna 732. A duplex switch (not shown) may alternatively couple the RF transmitter or receiver to the antenna in time duplex fashion. Similarly, in accordance with some embodiments, the transceiver 710 includes an RF transmitter and a RF receiver each having circuitry that is coupled to the antenna 712 or the antenna of another base station. A duplex switch may alternatively couple the RF transmitter or receiver to the antenna 712 in time duplex fashion. The operations of the two transceiver modules 710 and 730 can be coordinated in time such that the receiver circuitry is coupled to the antenna 732 for reception of transmissions over a wireless transmission link at the same time that the transmitter is coupled to the antenna 712. In some embodiments, there is close time synchronization with a minimal guard time between changes in duplex direction.

The UE transceiver 730 and the transceiver 710 are configured to communicate via the wireless data communication link, and cooperate with a suitably configured RF antenna arrangement 712/732 that can support a particular wireless communication protocol and modulation scheme. In some illustrative embodiments, the UE transceiver 710 and the transceiver 710 are configured to support industry standards such as the Long Term Evolution (LTE) and emerging 5G standards, and the like. It is understood, however, that the present disclosure is not necessarily limited in application to a particular standard and associated protocols. Rather, the UE transceiver 730 and the base station transceiver 710 may be configured to support alternate, or additional, wireless data communication protocols, including future standards or variations thereof.

The transceiver 710 and the transceiver of another base station (such as but not limited to, the transceiver 710) are configured to communicate via a wireless data communication link, and cooperate with a suitably configured RF antenna arrangement that can support a particular wireless communication protocol and modulation scheme. In some illustrative embodiments, the transceiver 710 and the transceiver of another base station are configured to support industry standards such as the LTE and emerging 5G standards, and the like. It is understood, however, that the present disclosure is not necessarily limited in application to a particular standard and associated protocols. Rather, the transceiver 710 and the transceiver of another base station may be configured to support alternate, or additional, wireless data communication protocols, including future standards or variations thereof.

In accordance with various embodiments, the base station 702 may be a base station such as but not limited to, an eNB, a serving eNB, a target eNB, a femto station, or a pico station, for example. The base station 702 can be an RN, a regular , a DeNB, a gNB, or an IAB donor. In some embodiments, the UE 701 may be embodied in various types of user devices such as a mobile phone, a smart phone, a personal digital assistant (PDA), tablet, laptop computer, wearable computing device, etc. The processor modules 714 and 736 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the method or algorithm disclosed herein can be embodied directly in hardware, in firmware, in a software module executed by processor modules 714 and 736, respectively, or in any practical combination thereof. The memory modules 716 and 734 may be realized as RAM memory, flash memory, ROM memory, EPROM memory, EEPROM memory, registers, a hard disk, a removable disk, a CD-ROM, or any other form of storage medium known in the art. In this regard, memory modules 716 and 734 may be coupled to the processor modules 710 and 730, respectively, such that the processors modules 710 and 730 can read information from, and write information to, memory modules 716 and 734, respectively. The memory modules 716 and 734 may also be integrated into their respective processor modules 710 and 730. In some embodiments, the memory modules 716 and 734 may each include a cache memory for storing temporary variables or other intermediate information during execution of instructions to be executed by processor modules 710 and 730, respectively. Memory modules 716 and 734 may also each include non-volatile memory for storing instructions to be executed by the processor modules 710 and 730, respectively.

The network communication module 718 generally represents the hardware, software, firmware, processing logic, and/or other components of the base station 702 that enable bidirectional communication between the transceiver 710 and other network components and communication nodes in communication with the base station 702. For example, the network communication module 718 may be configured to support internet or WiMAX traffic. In a deployment, without limitation, the network communication module 718 provides an 802.3 Ethernet interface such that the transceiver 710 can communicate with a conventional Ethernet based computer network. In this manner, the network communication module 718 may include a physical interface for connection to the computer network (e.g., Mobile Switching Center (MSC)). In some embodiments in which the base station 702 is an IAB donor, the network communication module 718 includes a fiber transport connection configured to connect the base station 702 to a core network. The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A wireless communication method, comprising:

   determining, by a wireless communication device, a monitoring occasion for monitoring uplink cancelation indication, UL CI, indicating that uplink transmission on an uplink resource is canceled, wherein an end position of the monitoring occasion is no later than a predetermined time interval before a start position of the uplink transmission; and
   monitoring, by the wireless communication device, the UL CI in at least the monitoring occasion, wherein:

   a plurality of monitoring occasions are in downlink symbols; and
   the monitoring occasion is a latest one of the plurality of monitoring occasions that ends no later than the predetermined time interval before the start position of the uplink resource,
   wherein the predetermined time interval corresponds to a time interval needed by the wireless communication device to process the UL CI that indicates canceled transmissions on all flexible slots and uplink slots within a slot configuration period.

2. The method of claim 1, wherein the monitoring occasion is configured to be in a downlink symbol according to Radio Resource Control, RRC, signaling.

3. The method of claim 2, wherein

   the RRC signaling comprises a cell-specific parameter that configures a same slot format for a plurality of wireless communication devices in a same cell; and
   the plurality of wireless communication devices comprises the wireless communication device.

4. The method of claim 2, wherein the RRC signaling comprises TDD-UL-DL-ConfigCommon.

5. The method of claim 2, wherein the RRC signaling comprises a UE-specific parameter that configures a slot format for the wireless communication device.

6. The method of claim 2, wherein the RRC signaling comprises TDD-UL-DL-ConfigDedicated.

7. The method of claim 1, wherein determining the monitoring occasion comprises:

   receiving, by the wireless communication device from a base station, a scheduling downlink control information, DCI; and
   determining, by the wireless communication device, whether at least one of a plurality of available monitoring occasions are in a semi-static downlink symbol that is after decoding of a scheduling DCI.

8. The method of claim 1, further comprising receiving, by the wireless communication from a base station, enabling indicator indicating whether one of a plurality of mechanisms is used to determine the monitoring occasion, wherein the enabling indicator is transmitted via a RRC signaling.

9. A wireless communication device, comprising at least one processor configured to implement the method of any one of claims 1 to 8.


**Patentansprüche**

1. Drahtloskommunikationsverfahren, umfassend:

   Bestimmen, durch eine Drahtloskommunikationsvorrichtung, eines Überwachungsanlasses zum Überwachen einer Uplink-Abbruchanzeige, UL CI, die angibt, dass eine Uplink-Übertragung auf einer Uplink-Ressource abgebrochen wird, wobei eine Endposition des Überwachungsanlasses nicht später als ein vorbestimmtes Zeitintervall vor einer Startposition der Uplink-Übertragung ist; und
   Überwachen, durch die Drahtloskommunikationsvorrichtung, der UL CI in zumindest dem Überwachungsanlass, wobei:

   eine Vielzahl von Überwachungsanlässen in Downlink-Symbolen sind; und
   der Überwachungsanlass ein letzter Überwachungsanlass der Vielzahl von Überwachungsanlässen ist, der spätestens nach Ablauf des vorbestimmten Zeitintervalls vor der Startposition der Uplink-Ressource endet, wobei das vorbestimmte Zeitintervall einem Zeitintervall entspricht, das von der Drahtloskommunikationsvorrichtung benötigt wird, um die UL CI zu verarbeiten, die abgebrochenen Übertragungen über alle flexiblen Slots und Uplink-Slots in einer Slotkonfigurationsperiode angibt.

2. Verfahren nach Anspruch 1, wobei der Überwachungsanlass derart konfiguriert ist, dass er sich in einem Downlink-Symbol gemäß einer Radio Resource Control, RRC-Signalisierung befindet.

3. Verfahren nach Anspruch 2, wobei

   die RRC-Signalisierung einen zellspezifischen Parameter umfasst, der ein gleiches Slot-Format für eine Vielzahl von Drahtloskommunikationsvorrichtungen in einer gleichen Zelle konfiguriert; und
   die Vielzahl der Drahtloskommunikationsvorrichtungen die DrahtlosKommunikationsvorrichtung umfasst.

**4.** Verfahren nach Anspruch 2, wobei die RRC-Signalisierung TDD-UL-DL-ConfigCommon umfasst.

**5.** Verfahren nach Anspruch 2, wobei die RRC-Signalisierung einen UEspezifischen Parameter umfasst, der ein Slot-Format für die Drahtloskommunikationsvorrichtung konfiguriert.

**6.** Verfahren nach Anspruch 2, wobei die RRC-Signalisierung TDD-UL-DL-ConfigDedicated umfasst.

**7.** Verfahren nach Anspruch 1, wobei die Bestimmung des Überwachungsanlasses umfasst:

Empfangen von Planungs-Downlink-Steuerungsinformationen, DCI, durch die Drahtloskommunikationsvorrichtung von einer Basisstation; und

Bestimmen, durch die Drahtloskommunikationsvorrichtung, ob zumindest eine aus einer Vielzahl von verfügbaren Überwachungsanlässen in einem semi-statischen Downlink-Symbol ist, das nach der Decodierung von Planungs-DCI folgt.

**8.** Verfahren nach Anspruch 1, ferner umfassend das Empfangen eines Aktivierungsindikators durch die Drahtloskommunikationsvorrichtung von einer Basisstation, der angibt, ob einer von einer Vielzahl von Mechanismen verwendet wird, um den Überwachungsanlass zu bestimmen, wobei der Aktivierungsindikator über eine RRC-Signalisierung übertragen wird.

**9.** Drahtloskommunikationsvorrichtung, die zumindest einen Prozessor aufweist, welcher derart konfiguriert ist, dass er das Verfahren nach einem der Ansprüche 1 bis 8 implementiert.

**Revendications**

**1.** Procédé de communication sans fil, comprenant :

la détermination, par un dispositif de communication sans fil, d'une occasion de surveillance pour surveiller une indication d'annulation de liaison montante, UL CI, indiquant qu'une transmission en liaison montante sur une ressource de liaison montante est annulée, dans lequel une position de fin de l'occasion de surveillance n'est pas ultérieure à un intervalle de temps prédéterminé avant une position de début de la transmission en liaison montante ; et

la surveillance, par le dispositif de communication sans fil, de l'UL CI dans au moins l'occasion de surveillance, dans lequel :

une pluralité d'occasions de surveillance sont dans des symboles de liaison descendante ; et

l'occasion de surveillance est une dernière occasion de surveillance de la pluralité d'occasions de surveillance qui prend fin au plus tard à l'issue de l'intervalle de temps prédéterminé avant la position de début de la ressource de liaison montante,

dans lequel l'intervalle de temps prédéterminé correspond à un intervalle de temps requis par le dispositif de communication sans fil pour traiter l'UL CI qui indique des transmissions annulées sur la totalité des créneaux flexibles et des créneaux de liaison montante dans une période de configuration de créneau.

**2.** Procédé selon la revendication 1, dans lequel l'occasion de surveillance est configurée pour être dans un symbole de liaison descendante selon une signalisation de commande de ressources radio, RRC.

**3.** Procédé selon la revendication 2, dans lequel

la signalisation de RRC comprend un paramètre spécifique à une cellule qui configure un même format de créneau pour une pluralité de dispositifs de communication sans fil dans une même cellule ; et

la pluralité de dispositifs de communication sans fil comprend le dispositif de communication sans fil.

**4.** Procédé selon la revendication 2, dans lequel la signalisation de RRC comprend un paramètre de configuration commune de liaison montante-liaison descendante de duplexage par répartition dans le temps, TDD-UL-DL-ConfigCommon.

**5.** Procédé selon la revendication 2, dans lequel la signalisation de RRC comprend un paramètre spécifique à un UE qui configure un format de créneau pour le dispositif de communication sans fil.

6. Procédé selon la revendication 2, dans lequel la signalisation RRC comprend un paramètre de configuration dédiée de liaison montante-liaison descendante de duplexage par répartition dans le temps, TDD-UL-DL-ConfigDedicated.

7. Procédé selon la revendication 1, dans lequel la détermination de l'occasion de surveillance comprend :

la réception, par le dispositif de communication sans fil d'une station de base, d'une information de commande de liaison descendante, DCI, de planification ; et
la détermination, par le dispositif de communication sans fil, pour savoir si au moins une d'une pluralité d'occasions de surveillance disponibles est dans un symbole de liaison descendante semi-statique qui est ultérieur au décodage d'une DCI de planification.

8. Procédé selon la revendication 1, comprenant en outre la réception, par le dispositif de communication sans fil d'une station de base, d'un indicateur d'activation indiquant si un mécanisme d'une pluralité de mécanismes est utilisé pour déterminer l'occasion de surveillance ou non, dans lequel l'indicateur d'activation est transmis par l'intermédiaire d'une signalisation de RRC.

9. Dispositif de communication sans fil, comprenant au moins un processeur configuré pour mettre en œuvre le procédé selon l'une quelconque des revendications 1 à 8.

**FIG. 1**

200

CI1    CI2    CI3    CI4         X

| D | D | F | F | U | U | U | U | U | U |

211   212   213   214   215   216  225  217   218   219   220

Slot Configuration Period 202

Time →

**FIG. 2**

300

335

CI1    CI2    CI3    CI4         X

| D | D | F | F | U | U | U | U | U | U |

311  312  330  T   313  314   315   316  325  317   318   319   320

Slot Configuration Period 302

Time →

**FIG. 3**

FIG. 4

<u>500</u>

510

Determining monitoring occasion for monitoring UL CI indicating that uplink transmission on uplink resource is canceled, end position of the monitoring occasion is no later than predetermined time interval before start position of uplink transmission

520

Monitoring UL CI in at least monitoring occasion

## FIG. 5

<u>600</u>

610

Detecting UL CI indicating that uplink transmission on uplink resource within RUR is canceled

620

Determining RUR based on at least one of time-domain starting point of RUR, time-domain duration of RUR, or frequency-domain range of RUR

## FIG. 6

FIG. 7A

FIG. 7B

EP 4 062 697 B1